# EUROPEAN PATENT APPLICATION

(11) **EP 4 164 102 A1**
(43) Date of publication of application: **12.04.2023**
(21) Application number: 22199645.7
(22) Date of filing: 04.10.2022
(51) Int. Cl.: H02M 1/42, H02M 7/00, H02M 7/487, H02M 5/458

(54) **DC BUS CAPACITOR ASSEMBLIES FOR VIENNA VFD IN AIR CONDITIONING SYSTEMS**

(30) Priority: 05.10.2021 US 202163252303 P
(71) Applicant: Carrier Corporation, Palm Beach Gardens, FL 33418 (US)
(72) Inventor: BORISOV, Konstantin, Bloomfield, CT 06002 (US); AGIRMAN, Ismail, Bloomfield, CT 06002 (US)
(74) Representative: Dehns

(57) **Abstract**

A drive for an air conditioning system includes a converter assembly including a Vienna rectifier having a converter capacitance across a positive DC bus and a negative DC bus; and an inverter assembly including an inverter capacitance across the positive DC bus and the negative DC bus, the inverter capacitance in electrical parallel with the converter capacitance; wherein the converter assembly and the inverter assembly are physically separate assemblies.

## Description

The invention relates to a drive for an air conditioning system, and an air conditioning system comprising the drive. Exemplary embodiments of this disclosure pertain to the art of variable frequency drives (VFDs) for air conditioning systems, and more specifically to DC bus capacitor assemblies for use in Vienna VFDs for air conditioning systems.

Air conditioning systems often employ a drive to power a compressor motor. Existing drives may include an AC-DC converter and a DC-AC inverter. The AC-DC converter converts multiphase, AC input voltage (main or grid power) to a DC output voltage. The DC-AC inverter converters the DC output from the converter to an AC output suitable to drive the motor of the compressor at a suitable, often variable, speed. A capacitance is used between the AC-DC converter and a DC-AC inverter to filter the DC output voltage decouple the AC-DC converter and a DC-AC inverter. The needed capacitance can be quite large, resulting in large drives having a large footprint.

According to a first aspect of the invention, there is provided a drive for an air conditioning system including a converter assembly including a Vienna rectifier having a converter capacitance across a positive DC bus and a negative DC bus; and an inverter assembly including an inverter capacitance across the positive DC bus and the negative DC bus, the inverter capacitance in electrical parallel with the converter capacitance; wherein the converter assembly and the inverter assembly are physically separate assemblies.

Optionally, the converter capacitance includes a first capacitor and a second capacitor.

Optionally, the first capacitor is connected between the positive DC bus and a neutral point and the second capacitor is connected between the negative DC bus and the neutral point.

Optionally, the inverter capacitance includes a third capacitor.

According to a second aspect of the present invention, there is provided an air conditioning system comprising the drive as described herein with reference to the first aspect of the invention. The air conditioning system may comprise a compressor, condenser and evaporator, and a motor configured to drive the compressor. The drive may be configured to power the motor. The system may comprise any of the features recited herein with reference to the first aspect of the invention.

According to a third aspect of the present invention, there is provided an air conditioning system including a compressor, condenser and evaporator; a motor configured to drive the compressor; a drive for configured to power the motor, the drive comprising: a converter assembly including a Vienna rectifier having a converter capacitance across a positive DC bus and a negative DC bus; and an inverter assembly including an inverter capacitance across the positive DC bus and the negative DC bus, the inverter capacitance in electrical parallel with the converter capacitance; wherein the converter assembly and the inverter assembly are physically separate assemblies.

Optionally, the converter capacitance includes a first capacitor and a second capacitor.

Optionally, the first capacitor is connected between the positive DC bus and a neutral point and the second capacitor is connected between the negative DC bus and the neutral point.

Optionally, the inverter capacitance includes a third capacitor.

Technical effects of embodiments of this disclosure include a reduction of the footprint of a drive used in an air conditioning system.

Additional technical features and benefits are realized through the techniques of the present disclosure. Embodiments and aspects of the disclosure are described in detail herein and are considered a part of the claimed subject matter. For a better understanding, refer to the detailed description and to the drawings.

The following descriptions should not be considered limiting in any way. With reference to the accompanying drawings, like elements are numbered alike:
FIG. 1 is a block diagram of an air conditioning system in an example embodiment;
FIG. 2 is a schematic diagram of a converter in an example embodiment;
FIG. 3 depicts a physical arrangement of components of a drive in an example embodiment.

A detailed description of one or more embodiments of the disclosed apparatus and method are presented herein by way of exemplification and not limitation with reference to the Figures.

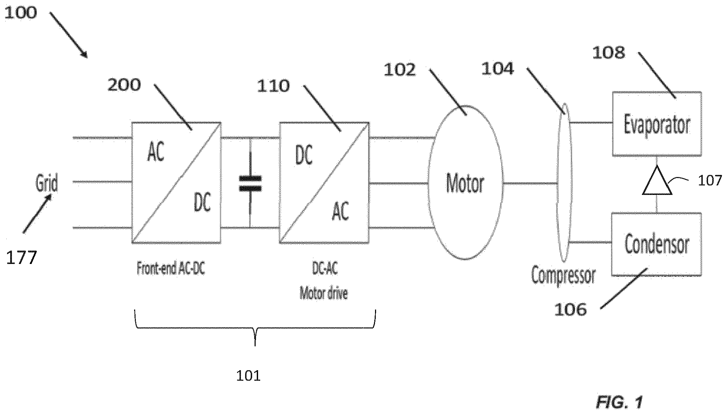

FIG. 1 is a block diagram of air conditioning system 100 in an example embodiment. The air conditioning system 100 may be configured to condition air in a building, such as a chiller, roof top unit, heat pump, etc. The air conditioning system 100 may be configured to condition air for refrigerated environments, such as a refrigerated container, a refrigerated trailer, refrigerator/freezer, etc.

The air conditioning system 100 includes a variable speed motor 102 that is coupled to a compressor 104. The compressor 104 includes an impeller/rotor that rotates and compresses liquid refrigerant to a superheated refrigerant vapor for delivery to a condenser 106. In the condenser 106, the refrigerant vapor is liquefied at high pressure and rejects heat (e.g., to the outside air via a condenser fan in an air-cooled application). The liquid refrigerant exiting condenser 106 is delivered to an evaporator 108 through an expansion valve 107. The refrigerant passes through the expansion valve 107 where a pressure drop causes the high-pressure liquid refrigerant to achieve a lower pressure combination of liquid and vapor. As fluid passes the evaporator 108, the low-pressure liquid refrigerant evaporates, absorbing heat from the fluid, thereby cooling the fluid and evaporating the refrigerant. The low-pressure refrigerant is again delivered to compressor 104 where it is compressed to a high-pressure, high temperature gas, and delivered to condenser 106 to start the refrigeration cycle again. It is to be appreciated that while a specific air conditioning system is shown in FIG. 1, the present teachings are applicable to any air conditioning system.

As shown in FIG. 1, the compressor 104 driven by a variable speed motor 102 from power supplied from a multiphase, AC input voltage 177 (grid or mains) through a drive 101 including an AC-DC converter 200 and a DC-AC inverter 110. The drive 101 may be a variable frequency drive (VFD). The inverter 110 includes solid-state electronics to produce multiphase, AC output voltage. In an embodiment, inverter 110 converts the DC output voltage from the converter 200 into a multiphase, AC output voltage, at a desired frequency and/or magnitude in order to drive the multiphase motor 102.

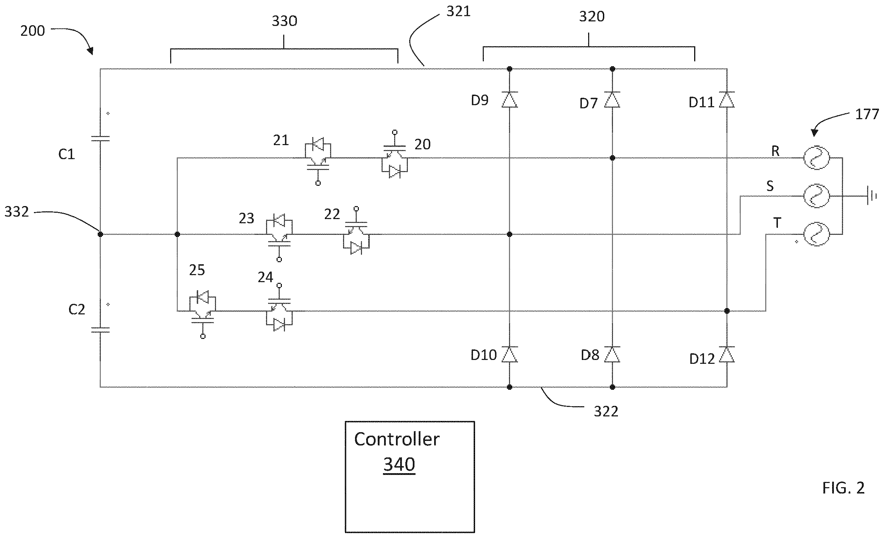

FIG. 2 is a schematic diagram of a Vienna converter 200, along with the multiphase, AC input voltage 177 in an example embodiment. The converter 200 is a Vienna rectifier. The converter 200 includes a rectifier section 320 having a plurality of rectifier legs. The number of rectifier legs equals the number of phases of the AC input voltage 177, shown as phases R, S and T, at the input to the rectifier section 320. Each rectifier leg includes a pair of diodes. As shown in FIG. 2, the cathode of diode D7 is connected to a positive DC bus 321, the anode of diode D7 is connected to phase R of the multiphase, AC input voltage 177, the cathode of diode D8 is connected to phase R of the multiphase, AC input voltage 177 and the anode of diode D8 is connected to a negative DC bus 322. Diodes D9-D12 are arranged in a similar manner, with respect to phases S and T of the multiphase, AC input voltage 177.

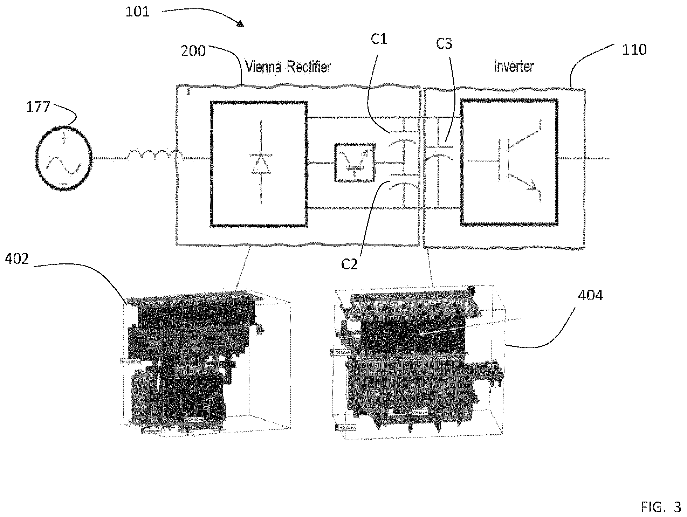

The converter 200 includes a voltage regulator section 330 having a plurality of voltage regulator legs. The number of voltage regulator legs equals the number of phases of the multiphase, AC input voltage 177, shown as phases R, S and T at the input to the voltage regulator section 330. Each voltage regulator leg includes a pair of switches. As shown in FIG. 2, switches 20 and 21 define a first voltage regulator leg, switches 22 and 23 define a second voltage regulator rectifier leg and switches 24 and 25 define a third voltage regulator leg. Switches 20-25 can be any type of switch including, but not limited to, an insulated gate bipolar transistor (IGBT) or a metal-oxide-semiconductor field effect transistor (MOSFET). The first, second and third voltage regulator legs regulate voltage on the positive DC bus 321, the negative DC bus 322 and a neutral point 332 between the positive DC bus 321 and the negative DC bus 322. A capacitor C1 is connected between the positive DC bus 321 and the neutral point 332. A capacitor C2 is connected between the negative DC bus 322 and the neutral point 332. Capacitors C1 and C2 provide for filtering and smoothing of the DC output voltage between the positive DC bus 321 and the negative DC bus 322. The rectifier section 320, voltage regulator section 330 and capacitors C1 and C2 are part of a converter assembly 402 (FIG. 3).

A controller 340 monitors one or more parameters of the converter 200 and controls switches 20-25 accordingly. The controller 340 may be implemented using a general-purpose microprocessor executing a computer program stored on a storage medium to perform the operations described herein. Alternatively, the controller 340 may be implemented in hardware (e.g., ASIC, FPGA) or in a combination of hardware/software. The controller 340 may also be part of an air conditioning control system. The controller 340 provides control signals to switches 20-25 of the voltage regulator section 330. The control signals may be pulse width modulation (PWM) signals, as known in the art. The controller 340 operates the converter 200 to control the DC output voltage across the positive DC bus 321 and the negative DC bus 322.

The DC output voltage of the converter 200 is provided across the positive DC bus 321 and the negative DC bus 322. The DC output voltage of the converter 200 is provided to the inverter 110. The inverter 110 may be implemented using a multilevel, multiphase inverter topologies (e.g., a 3 level, multiphase, T-type inverter). The output of the inverter 110 is a multiphase, AC output voltage which is provided to the phase windings of the motor 102. The inverter 110 may be controlled by the controller 340 using known signaling (e.g., PWM control).

FIG. 3 depicts a physical arrangement of components of the drive 101. The converter 200, a Vienna rectifier, is implemented through a converter assembly 402. The converter assembly 402 includes the rectifier section 320, the voltage regulator section 330 and the capacitors C1 and C2, referred to as a converter capacitance. The inverter 110 is implemented through an inverter assembly 404. The inverter assembly 404 includes switches for DC to AC conversion and a capacitor C3, referred to as an inverter capacitance. Capacitor C3 is electrically connected across the positive DC bus 321 and the negative DC bus 322. Capacitor C3 is electrically connected in electrical parallel with capacitors C1 and C2. The converter assembly 402 and the inverter assembly 404 are physically separate assemblies.

By including capacitor C3 in the inverter assembly 404, in parallel with series capacitors C1 and C2, the total capacitance requirement is split into two portions, where one portion of the capacitance, C1 and C2, is connected to the Vienna rectifier power section and middle point 332. The other portion of the capacitance, C3, is connected directly to the inverter 110 between the positive DC bus 321 and the negative DC bus 322 terminals. This allows capacitances C1, C2 and C3 to be smaller than if only C1 and C2 were used. This results in smaller capacitors used in the drive 101, and a smaller footprint, less weight, etc.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A drive for an air conditioning system, the drive comprising:
a converter assembly including a Vienna rectifier having a converter capacitance across a positive DC bus and a negative DC bus; and
an inverter assembly including an inverter capacitance across the positive DC bus and the negative DC bus, the inverter capacitance in electrical parallel with the converter capacitance;
wherein the converter assembly and the inverter assembly are physically separate assemblies.

2. The drive of claim 1, wherein the converter capacitance includes a first capacitor and a second capacitor.

3. The drive of claim 2, wherein the first capacitor is connected between the positive DC bus and a neutral point and the second capacitor is connected between the negative DC bus and the neutral point.

4. The drive of claim 2 or 3 wherein the inverter capacitance includes a third capacitor.

5. An air conditioning system comprising:
a compressor, condenser and evaporator;
a motor configured to drive the compressor;
the drive of claim 1, configured to power the motor.

6. The air conditioning system of claim 5, wherein the converter capacitance includes a first capacitor and a second capacitor.

7. The air conditioning system of claim 6 wherein the first capacitor is connected between the positive DC bus and a neutral point and the second capacitor is connected between the negative DC bus and the neutral point.

8. The air conditioning system of claim 6 wherein the inverter capacitance includes a third capacitor.
